# EUROPEAN PATENT APPLICATION

(11) **EP 4 431 482 A1**
(43) Date of publication of application: **18.09.2024**
(21) Application number: 22889701.3
(22) Date of filing: 30.09.2022
(51) Int. Cl.: C04B 35/057, C01F 7/164, C01F 17/235, H01B 1/08

(54) **OXIDE ION-CONDUCTING SOLID ELECTROLYTE**

(30) Priority: 08.11.2021 JP 2021182099
(71) Applicant: AGC INC., Chiyoda-ku, Tokyo 1008405 (JP)
(72) Inventor: KAGA, Hiroshi, Tokyo 100-8405 (JP); TODA, Yoshitake, Tokyo 100-8405 (JP); TOMENO, Satoru, Tokyo 100-8405 (JP)
(74) Representative: TBK
(86) International application number: PCT/JP2022/036725
(87) International publication number: WO 2023/079877

(57) **Abstract**

An oxide ion-conducting solid electrolyte includes a mayenite-type compound having a representative composition represented by Ca₁₂Al₁₄O₃₃ and a crystalline phase of cerium oxide (CeO₂).

## Description

### FIELD OF THE INVENTION

The present invention relates to an oxide ion-conducting solid electrolyte.

### BACKGROUND OF THE INVENTION

Oxide ion-conducting solid electrolytes can be used as various electrical devices such as solid oxide fuel cells (SOFC), solid oxide electrolyzer cells (SOEC), oxygen sensors, oxygen pumps, and the like.

In recent years, a high efficiency energy system combining SOFC and SOEC has attracted attention as one of the realization forms of the technology concept called Power to Gas/Chemical, which has attracted attention for the popularization of renewable energy.

SOFC and SOEC are electrochemical cells that operate at high temperatures. The former can handle various fuels such as hydrogen, carbon monoxide, methane, and the like, while the latter can electrolyze water and carbon dioxide produced by the operation of the SOFC and convert them back into hydrogen and carbon monoxide.

Each of SOFC and SOEC has a solid electrolyte provided between two electrodes and operates by conducting oxide ions through the solid electrolyte.

### RELATED-ART DOCUMENT

### Patent Documents

[Patent Document 1] International Publication No. 2019/189701

### Non-Patent Documents

[Non-Patent Document 1] M. Lacerda et al., "High Oxide ion conductivity in Ca12Al14O33" Nature, vol. 332, P525, 7, April (1988)
[Non-Patent Document 2] F. M. Lea, C. H. Desch, The Chemistry of Cement and Concrete, 2nd ed., p. 52, Edward Arnold & Co., London, 1956
[Non-Patent Document 3] A. Pedone et al. J. Phys. Chem. B 110, 11780-11795 (2006)
[Non-Patent Document 4] L. B. Skinner et al. Phys. Rev. Lett. 112, 157801 (2014)

### SUMMARY OF THE INVENTION

### Problems to be Solved by the Invention

Materials such as yttria-stabilized zirconia (YSZ) and scandia-stabilized zirconia (ScSZ) have been proposed as solid electrolytes for SOFC and SOEC.

Recently, it has been reported that a mayenite-type compound exhibits oxide ion conductivity (non-patent document 1). The mayenite-type compound has a crystal structure containing free oxide ions in a cage. Therefore, it is possible that the free oxide ions can contribute to ion conduction.

However, according to the present inventors, the ion conductivity of the conventional mayenite-type compound is not very high (for example, about 1/10 of YSZ).

Therefore, in order to apply the mayenite-type compound to an oxide ion-conducting solid electrolyte, further improvement is required.

In view of this background, an object of the present invention is to provide a solid electrolyte having a mayenite-type compound structure and having significantly high oxide ion conductivity.

### Means for Solving the Problems

In the present invention, an oxide ion-conducting solid electrolyte includes a mayenite-type compound having a representative composition represented by Ca₁₂Al₁₄O₃₃ and a crystalline phase of cerium oxide (CeO₂).

### Effects of the Invention

In the present invention, a solid electrolyte having a mayenite-type compound structure and having significantly high oxide ion conductivity can be provided.

### BRIEF DESCRIPTION OF THE DRAWINGS

[FIG. 1] FIG. 1 is a diagram schematically illustrating an example of a configuration of an SOFC having an oxide ion-conducting solid electrolyte according to an embodiment of the present invention;
[FIG. 2] FIG. 2 is a diagram schematically illustrating an example of a configuration of an SOEC having an oxide ion-conducting solid electrolyte according to an embodiment of the present invention;
[FIG. 3] FIG. 3 is a diagram schematically illustrating an example of a flow of a method of producing the oxide ion-conducting solid electrolyte according to an embodiment of the present invention; and
[FIG. 4] FIG. 4 is a diagram schematically illustrating an example of a flow of another method of producing the oxide ion-conducting solid electrolyte according to an embodiment of the present invention.

### DETAILED DESCRIPTION OF THE INVENTION

Hereinafter, an embodiment of the present invention will be described.

### (Oxide Ion-Conducting Solid Electrolyte According to One Embodiment of the Present Invention)

In an embodiment of the present invention, an oxide ion-conducting solid electrolyte includes a mayenite-type compound having a representative composition represented by Ca₁₂Al₁₄O₃₃ and a crystalline phase of cerium oxide (CeO₂).

The oxide ion-conducting solid electrolyte (hereinafter referred to as "first solid electrolyte") according to an embodiment of the present invention includes a mayenite-type compound of a C12A7 structure.

The mayenite-type compound has a representative composition represented by 12CaO·7Al₂O₃ and has a characteristic crystal structure with three-dimensionally connected voids (cages) of about 0.4 nm in diameter.

The framework of the cages is positively charged and forms 12 cages per unit cell. 1/6 of the cages are occupied by oxide ions to satisfy the electroneutrality condition of the crystal. However, the oxide ions in the cages have chemically different properties from the other oxygen ions that constitute the framework, and therefore the oxide ions in the cages are specifically called free oxide ions.

The mayenite-type compound is also represented by the composition formula:

[Ca₂₄Al₂₈O₆₄]⁴⁺(O²⁻)₂ (Non-Patent Document 2).

As mentioned above, the mayenite-type compound may function as an oxide ion conductor because the mayenite-type compound contains free oxide ions in the cage (Non-Patent Document 1).

However, according to the analysis by the present inventors, it is recognized that the ionic conductivity of the general mayenite-type compound having the above composition formula is not very high (for example, about 1/10 of YSZ).

Therefore, in order to apply the mayenite-type compound to an oxide ion-conducting solid electrolyte, further countermeasures are required.

The inventors of the present invention have been conducting intensive research and development on measures to enhance the oxide ion conductivity of materials containing mayenite-type compounds. The inventors of the present invention have found that a mixture of mayenite-type compounds and cerium oxide (CeO₂) has high ion conductivity. Accordingly, a first solid electrolyte has a mayenite-type compound and a crystalline phase of CeO₂.

CeO₂ has high oxide ion conductivity. Therefore, in the first solid electrolyte, the oxide ion conductivity can be enhanced by mixing the mayenite-type compound with CeO₂.

The CeO₂ in the present invention may be a composition deficient in oxygen from the stoichiometric composition (for example, a composition represented by CeO_{2-δ}). A condition of oxygen deficiency, i.e., introduction of oxygen vacancies, results in the development of higher ionic conductivity. In addition, CeO₂ may contain other metallic elements for the purpose of introducing oxygen vacancies.

Although the first solid electrolyte includes Ce in the CeO₂ crystal phase, Ce may also be included in the mayenite-type compound. In this case, Ce may be particularly located at sites of Ca atoms in the mayenite-type compound.

When the mayenite-type compound contains Ce, it is possible to enhance the oxide ion conductivity of the mayenite-type compound itself. This further enhances the oxide ion conductivity of the first solid electrolyte.

At present, in one embodiment of the present invention, the reason for enhancing the ion conductivity by including Ce in the mayenite-type compound may be considered as follows.

When Ce is included in the mayenite-type compound, it is considered that the Ce atom preferentially replaces the Ca atom at the site thereof.

Here, the Ca atom is divalent, while the Ce atom is tetravalent. Therefore, when the Ca atom is replaced with the Ce atom, the concentration of the oxide ion increases to maintain electroneutrality. In addition, the concentration of the free oxide ion in the cage also increases, which may improve the ionic conductivity.

Ce is preferably contained in the first solid electrolyte at 80 mol% or less in terms of CeO₂, more preferably in the range of 1 mol% to 70 mol%, even more preferably in the range of 1 mol% to 20 mol%, and most preferably in the range of 2 mol% to 16 mol%.

If the content of Ce in the first solid electrolyte is too high, the reduction tolerance of the first solid electrolyte may decrease. However, such decrease in reduction tolerant can be suppressed by reducing the content of Ce to 70 mol% or less in terms of CeO₂.

The first solid electrolyte may further contain titanium (Ti).

Ti may be contained in the range of 0.1 mol% to 30 mol%, in terms of TiO₂, to the whole of the first solid electrolyte. In particular, the content of Ti is preferably 8.1 mol% or more, in terms of TiO₂.

In the first solid electrolyte, Ti may be replaced with a site of an aluminum (Al) atom of a mayenite-type compound. The molar ratio Ti/Al of Ti atoms to Al atoms may be 0.015 ≤ Ti/Al ≤ 0.50.

When the first solid electrolyte contains Ti, the ionic conductivity is further improved. This is expected to be due to the following reasons.

When Ti is added to a mayenite-type compound, Ti atoms are assumed to be preferentially substituted at sites of Al atoms. However, Al atoms are trivalent, while Ti atoms are tetravalent. Therefore, when Al atoms are replaced with Ti atoms, the concentration of oxide ions increases to maintain electroneutrality. In addition, the concentration of free oxide ions in the cage also increases, which may improve the ionic conductivity.

The first solid electrolyte has significantly higher ionic conductivity than conventional mayenite-type compounds. Therefore, the first solid electrolyte can be expected to be used as a solid electrolyte in electrochemical devices such as SOFCs and SOECs.

### (Application)

The first solid electrolyte has significantly high oxide ion conductivity. Thus, the first solid electrolyte can be applied, for example, as a solid electrolyte for a solid oxide fuel cell (SOFC) cell and a solid electrolyte for SOEC.

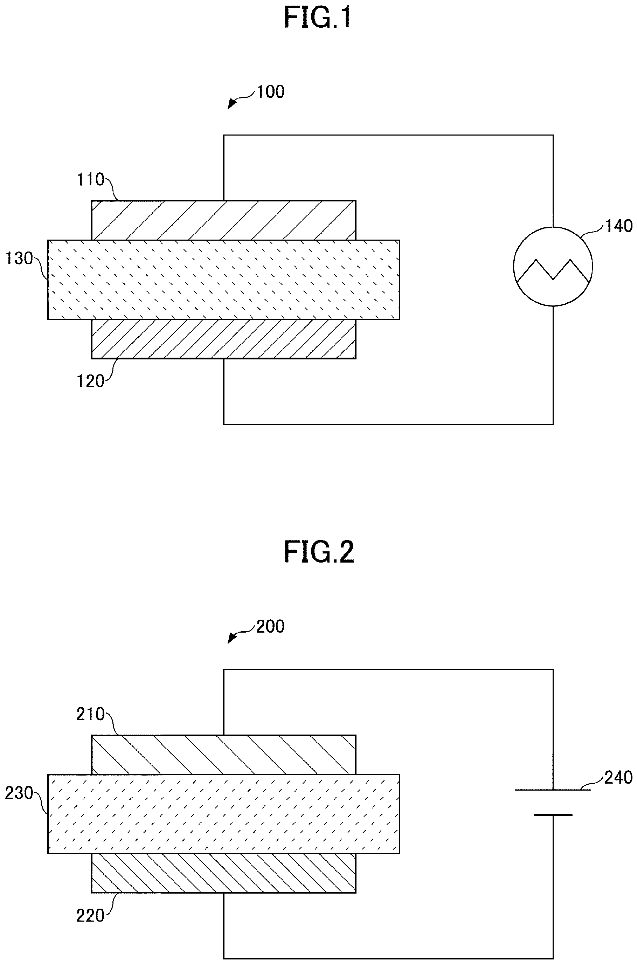

FIG. 1 schematically illustrates a configuration example of an SOFC cell.

As illustrated in FIG. 1, an SOFC cell 100 has an oxygen electrode 110, a fuel electrode 120, and a solid electrolyte 130 between the electrodes.

At the oxygen electrode 110, for example, the following reaction occurs:

O₂+4e⁻→2O²⁻ formula (1)

The oxide ions generated at the oxygen electrode 110 pass through the solid electrolyte 130 and reach the opposite fuel electrode 120. At the fuel electrode 120, for example, the following reaction occurs:

2H₂+2O²⁻→2H₂O+4e⁻ formula (2)

Therefore, when the SOFC cell 100 is connected to an external load 140, the reactions of formulas (1) and (2) continue, and electric power can be supplied to the external load 140.

In such an SOFC cell 100, for example, the first solid electrolyte can be applied as the solid electrolyte 130.

In the SOFC cell 100, since the solid electrolyte 130 has a significantly high oxide ion conductivity, it is possible to obtain a significantly high power generation efficiency.

FIG. 2 schematically illustrates a configuration example of an SOEC cell.

As illustrated in FIG. 2, an SOEC cell 200 has an oxygen electrode 210, a fuel electrode 220, and a solid electrolyte 230 between the electrodes.

At the oxygen electrode 210, for example, the following reaction occurs:

2O^{2 -}→O₂+4e⁻ formula (3)

Also, at the fuel electrode 220, for example, the following reaction occurs:

2H₂O+4e⁻→2H₂+2O²⁻ formula (4)

The oxide ions generated at the fuel electrode 220 pass through the solid electrolyte 230 and reach the opposite oxygen electrode 210. Therefore, when the SOEC cell 200 is connected to an external power supply 240, the reactions of formulas (3) and (4) continue.

In the SOEC cell 200, for example, the first solid electrolyte can be applied as the solid electrolyte 230.

In the SOEC cell 200, since the solid electrolyte 230 has a significantly high oxide ion conductivity, a significantly high electrolytic efficiency can be obtained.

The oxide ion-conducting solid electrolyte according to one embodiment of the present invention can be used in such an electrochemical cell as an "electrolyte layer" placed between two electrodes and also as an "electrolyte component" included in the electrodes.

The solid electrolyte according to one embodiment of the present invention may also be used in any form. For example, the solid electrolyte according to one embodiment of the present invention may be provided as a powder. Alternatively, the solid electrolyte according to one embodiment of the present invention may be mixed with a solvent and/or binder or the like and provided in the form of a slurry, paste or dispersion.

Various other forms of use can also be envisioned.

(Method of Producing Oxide Ion-Conducting Solid Electrolyte According to One Embodiment of the Invention)

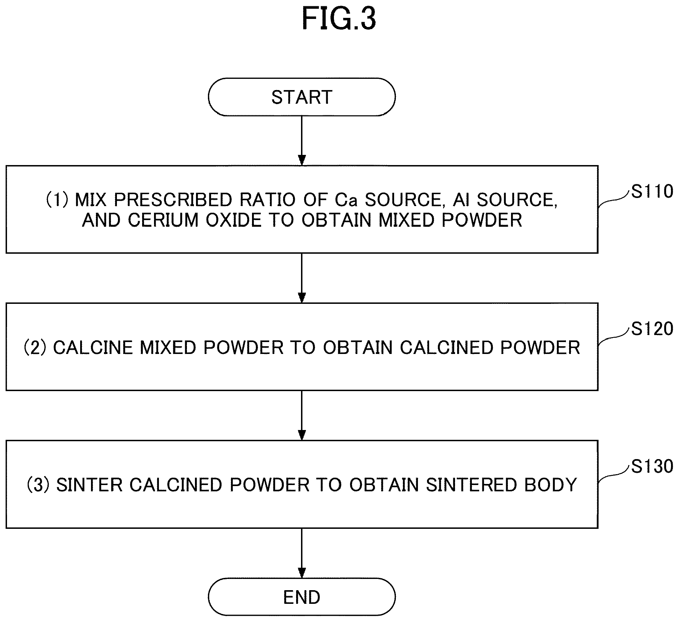

Next, an example of a method of producing an oxide ion-conducting solid electrolyte according to one embodiment of the present invention will be described with reference to FIG. 3.

FIG. 3 schematically illustrates an example of a flow of a method of producing an oxide ion-conducting solid electrolyte (hereinafter referred to as "first manufacturing method") according to one embodiment of the present invention.

As illustrated in FIG. 3, the first manufacturing method includes:
(1) a step of mixing a prescribed ratio of a Ca source, an Al source, and cerium oxide to obtain a mixed powder (step S110);
(2) a step of calcinating the mixed powder to obtain a calcined powder (step S120); and
(3) a step of sintering the calcined powder to obtain a sintered body (step S130).

Each step will be described below.

### (Step S110)

First, a mixed powder is prepared. Thus, a Ca source, an Al source, and cerium oxide are mixed in a prescribed ratio.

The Ca source may be selected from, for example, calcium metal, calcium carbonate, calcium oxide, calcium hydroxide, calcium nitrate, calcium acetate, and the like.

The Al source may be selected from, for example, metallic aluminum, α-alumina, γ-alumina, aluminum hydroxide, aluminum nitrate, aluminum sulfate, and the like.

The method of mixing is not particularly limited as long as a uniform mixed powder is obtained.

### (Step S120)

Next, the mixed powder is calcined.

The calcination step is carried out in order to remove compounds such as carbonic acid and nitric acid contained in the mixed powder, and to facilitate the formation of the desired mayenite-type compound in the next sintering step.

Although the conditions of calcination are not particularly limited, the calcination temperature is preferably 1000°C or higher in order to obtain the desired mixed oxide. However, if the calcination temperature is too high, excessive crystallization proceeds in the mixed powder. Therefore, the calcination temperature is preferably 1300°C or lower.

The calcination time is, for example, about 5 to 24 hours. However, the calcination time also varies depending on the calcination temperature, and the higher the calcination temperature, the shorter the calcination time.

Thus, a calcined powder is obtained.

The calcined powder may be pulverized if necessary. The average particle size after pulverizing may be in the range of 0.1 um to 100 µm, for example.

### (Step S130)

Next, the calcined powder is sintered.

The sintering step is performed to obtain a dense sintered body having the desired crystalline phase.

The calcined powder may be molded prior to the sintering step, and a sintering step may be carried out using the molded body.

The molding conditions are not particularly limited, and a general molding method such as a uniaxial molding method or a hydrostatic molding method may be employed.

The sintering method is not particularly limited, and the calcined powder or the molded body may be sintered by a pressureless sintering method under normal pressure, for example.

Alternatively, the calcined powder may be sintered by a pressure-sintering method such as hot-press sintering or spark plasma sintering. In this case, molding and sintering may be performed in one step.

The sintering temperature is not particularly limited as long as a suitable sintered body is obtained, but is preferably in the range of 1200°C to 1400°C. If the sintering temperature is too low, a dense sintered body may not be obtained. If the sintering temperature is too high, melting of the treated body may occur.

It is desirable to select the optimum sintering time according to the sintering temperature. Generally, the higher the sintering temperature, the shorter the sintering time.

The optimum sintering time varies depending on the sintering temperature. In the case of the pressureless sintering, the optimum sintering time is, for example, about 5 to 48 hours. In the case of the pressure-sintering such as a spark plasma sintering, the optimum sintering time is, for example, about 5 to 60 minutes.

When the pressure-sintering is performed using a container made of carbon, carbon may adhere to the surface of the sintered body. In such a case, the adhered carbon can be removed by heat treatment at 800°C to 1000°C for about 5 hours under ambient air.

By the above steps, an oxide ion-conducting solid electrolyte according to an embodiment of the present invention can be produced.

### (Another Method of Producing Oxide Ion-Conducting Solid Electrolyte According to One Embodiment of Present Invention)

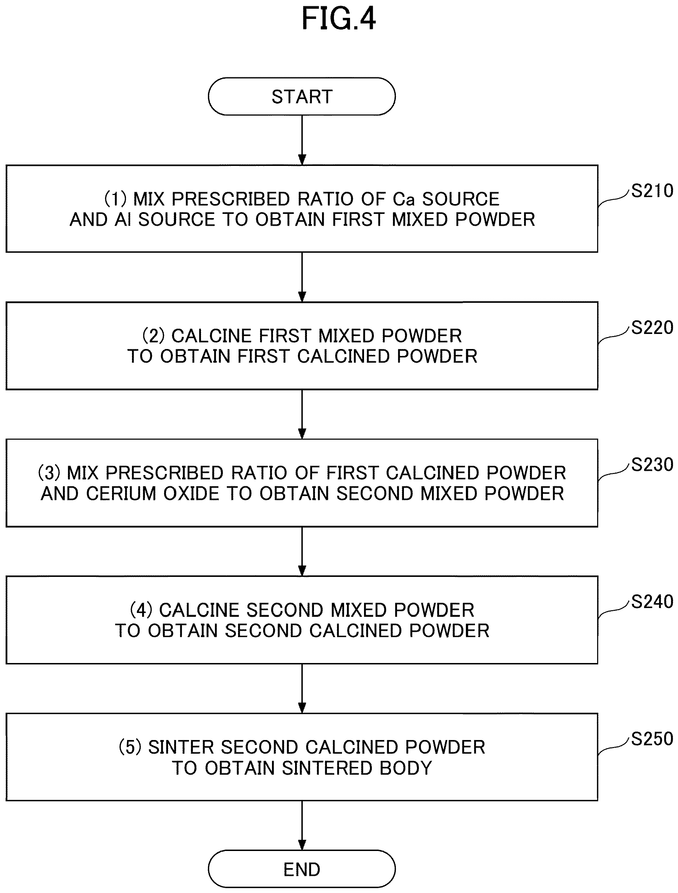

Next, an example of another method of producing an oxide ion-conducting solid electrolyte according to an embodiment of the present invention will be described with reference to FIG. 4.

FIG. 4 schematically illustrates an example of a flow of another method of producing an oxide ion-conducting solid electrolyte according to an embodiment of the present invention (hereinafter referred to as "second manufacturing method").

As illustrated in FIG. 4, the second manufacturing method includes:
(1) a step of mixing a prescribed ratio of a Ca source and an Al source to obtain a first mixed powder (step S210) ;
(2) a step of calcinating the first mixed powder to obtain a first calcined powder (step S220);
(3) a step of mixing prescribed ratio of the first calcined powder and cerium oxide to obtain a second mixed powder (step S230);
(4) a step of calcinating the second mixed powder to obtain a second calcined powder (step S240); and
(5)a step of sintering the second calcined powder to obtain a sintered body (step S250) .

The steps included in the second manufacturing method can be readily understood by those skilled in the art from the description of the steps S110 to S130 in the first manufacturing method described above. Accordingly, a detailed description of each step is omitted here.

However, in the second manufacturing method, unlike the first manufacturing method, the oxide ion-conducting solid electrolyte is manufactured through two calcination steps (step S220 and step S240) .

In this case, the oxide ion-conducting solid electrolyte having a mayenite-type compound and a crystalline phase of cerium oxide can be produced more reliably than in the case where a mixed powder including a Ca source, an Al source, and cerium oxide is calcined at one time as in the first manufacturing method.

Referring to the first manufacturing method and the second manufacturing method, a method of manufacturing an oxide ion-conducting solid electrolyte according to an embodiment of the present invention has been described. However, the above description is only an example, and the oxide ion-conducting solid electrolyte according to one embodiment of the present invention may be produced by another method, such as a hydrothermal method, a sol-gel method, a liquid-phase combustion method, and the like.

### EXAMPLES

Examples of the present invention will be described below.

In the following description, Examples 1 to 8 are Examples, and Examples 21 to 22 are Comparative Examples.

### (Example 1)

A sintered body was prepared by the following method.

### [Compounding Step]

Calcium carbonate powder (4.15 g), α-alumina powder (2.52 g), and cerium carbonate powder (0.152 g) were weighed, respectively. These were put into a pot containing zirconia balls of 5 mm ϕ and 10 cc isopropanol, and pulverized and mixed for 3 hours by a planetary ball milling method. The mixed powder was then dried at 100°C to remove the isopropanol. In addition, the mixed powder was separated from the zirconia balls by sieving.

### [Calcination Step]

The resulting mixed powder was placed in an alumina crucible and calcined at 1200°C for 5 hours in air. The resulting sample was pulverized in an agate mortar to produce calcined powder.

### [Sintering Step]

One gram of the calcined powder was placed in a carbide metal die of 1.5 cm ϕ, and 20 kN of pressure was applied in a hydraulic press to perform uniaxial molding. Furthermore, hydrostatic molding was carried out at 196 MPa, and pellets of 1.5 cm ϕ were produced. The pellets were heat-treated at 1200°C for 12 hours in air, and a sintered body of ϕ1.3cm ϕ and 2 mm in thickness was obtained.

The resulting sintered body is referred to as "Sample 1". In Sample 1, the content of Ce is 1.3 mol% in terms of CeO₂.

### (Examples 2 to 6)

Sintered bodies were prepared by the same method as in Example 1. However, in Examples 2 to 6, mixed powders were prepared by changing the ratio of each raw material in the aforementioned compounding step from that in Example 1. The other steps are the same as those in Example 1.

The resulting sintered bodies are referred to as "Sample 2" to "Sample 6", respectively.

### (Example 7)

A sintered body was prepared by the same method as in Example 1. However, in Example 7, in addition to calcium carbonate powder, α-alumina powder, and cerium oxide powder, titanium dioxide powder was added as a raw material in the aforementioned compounding step. The titanium dioxide powder was added so as to be 5.1 mol% based on the total amount. The Ti/Al ratio of the mixed powder was 0.077.

The other steps were the same as those in Example 1.

The resulting sintered body is referred to as "Sample 7".

### (Example 8)

A sintered body was prepared by the same method as in Example 7. However, in Example 8, the mixing ratio of each raw material was changed from that in Example 7 to prepare a mixed powder. The other steps are the same as those in Example 7.

The resulting sintered body is referred to as "Sample 8".

### (Example 21)

A sintered body was prepared by the same method as in Example 1. However, in Example 21, only calcium carbonate (4.33 g) and α-alumina (2.57 g) were mixed to prepare a mixed powder in the aforementioned compounding step. That is, the mixed powder was prepared without adding cerium oxide. The other steps are the same as those in Example 1.

The resulting sintered body is referred to as "Sample 21".

### (Example 22)

A sintered body was prepared by the same method as in Example 1. However, in Example 22, only cerium oxide powder was used to prepare the sintered body.

The resulting sintered body is referred to as "Sample 22".

Table 1 below summarizes the contents of Ce and Ti in each sample.

**[Table 1]**

| Examples | Ce | Ti | |
|---|---|---|---|
| | Content in terms of oxide (mol%) | Content in terms of oxide (mol%) | Ti/Al (molar ratio) |
| 1 | 1.3 | - | 0.0 |
| 2 | 2.6 | - | 0.0 |
| 3 | 5.3 | - | 0.0 |
| 4 | 11 | - | 0.0 |
| 5 | 16 | - | 0.0 |
| 6 | 71 | - | 0.0 |
| 7 | 2.6 | 5.1 | 0.077 |
| 8 | 2.5 | 10 | 0.17 |
| 21 | - | - | 0.0 |
| 22 | 100 | - | 0.0 |

### (Evaluation)

Each sample was used to evaluate the following evaluations.

### (X-ray Diffraction Analysis)

X-ray diffraction analysis was performed on each sample. A peak of CeO₂ crystals was observed in each sample except Sample 21.

### (Resistivity Measurement)

Resistivity measurements were performed on each sample. The impedance method was used to measure the resistivity.

First, the surface of each sample was polished with #80 to #1000 paper files to remove and smooth the surface layer.

Then, a platinum electrode of 6 mm ϕ and 10 µm in thickness was placed on the polished surface through a platinum paste. The sample was heat-treated at 1000°C for 15 minutes in an atmosphere to solidify the platinum paste.

The sample was then placed in an electric furnace in an atmosphere. The sample was also connected to a potentiogalvanostat (SP-150, manufactured by BioLogic) via a platinum wire coupled to the platinum electrode.

The sample was then heated to 850°C and held for 120 minutes to stabilize the temperature of the sample.

After the temperature of the sample was stabilized, impedance measurements were performed and Cole-Cole plots were generated. The measurement frequency was 1 MHz to 100 mHz.

In the obtained Cole-Cole plot, the resistivity was obtained from the intersection with the horizontal axis (real axis).

Table 2 below summarizes the resistivity measurement results obtained for each sample.

**[Table 2]**

| Examples | Relative Resistivity |
|---|---|
| 1 | 0.48 |
| 2 | 0.39 |
| 3 | 0.20 |
| 4 | 0.17 |
| 5 | 0.18 |
| 7 | 0.21 |
| 8 | 0.1 |
| 21 | 1 |

In Table 2, the resistivity of each sample is indicated by the relative resistivity, i.e., the ratio of the resistivity obtained in Sample 21.

### (Reduction Tolerance Evaluation Test)

Reduction tolerance was evaluated in some samples by the following methods.

Each sample was placed in a furnace and nitrogen gas flowed at a flow rate of 30 mL/min. The furnace was kept at 900°C for 1 h, then cooled slowly and each sample was collected.

The color changes of the samples before and after testing were visually evaluated. When the color of the samples after testing was cream and light gray, the redox tolerance was evaluated as "A" (good). When the color of the samples after testing was gray, the redox tolerance was evaluated as "B" (normal). When the color of the samples after testing was black, the redox tolerance was evaluated as "C" (poor).

Table 3 below summarizes the test results of the redox tolerance obtained from each sample.

**[Table 3]**

| Examples | Evaluation Results of Redox Tolerance |
|---|---|
| 3 | A |
| 4 | A |
| 6 | B |
| 22 | E |

From these results, it was found that the resistivity was greatly reduced in Samples 1 to 5 and Samples 7 to 8 compared to Sample 21. It was also found that Samples 3 to 4 and Sample 6 had significantly higher redox tolerance than Sample 22.

### (One Aspect of the Present Invention)

The present invention may have the following aspects.

### (Aspect 1)

An oxide ion-conducting solid electrolyte, includes: a mayenite-type compound having a representative composition represented by Ca₁₂Al₁₄O₃₃; and a crystalline phase of cerium oxide (CeO₂).

### (Aspect 2)

The oxide ion-conducting solid electrolyte according to Aspect 1, wherein the mayenite-type compound contains cerium (Ce).

### (Aspect 3)

The oxide ion-conducting solid electrolyte according to Aspect 1 includes 2 mol% to 16 mol% of Ce in terms of CeO₂.

### (Aspect 4)

The oxide ion-conducting solid electrolyte according to any one of Aspects 1 to 3, further includes 0.1 mol% to 30 mol% of titanium (Ti) in terms of TiO₂.

### (Aspect 5)

The oxide ion-conducting solid electrolyte according to Aspect 4, wherein the Ti is disposed at sites of Al atoms in the mayenite-type compound.

### (Aspect 6)

An electrochemical device comprising the oxide ion-conducting solid electrolyte of any one of Aspects 1 to 5.

This application claims priority under Japanese Patent Application No. 2021-182099 filed on November 8, 2021, the entire contents of which are incorporated herein by reference.

### DESCRIPTION OF THE REFERENCE NUMERALS

- 100: SOFC Cell
- 110: oxygen electrode
- 120: fuel electrode
- 130: solid electrolyte
- 140: external load
- 200: SOEC cell
- 210: oxygen electrode
- 220: fuel electrode
- 230: solid electrolyte
- 240: external power supply

## Claims

1. An oxide ion-conducting solid electrolyte, comprising:
a mayenite-type compound having a representative composition represented by Ca₁₂Al₁₄O₃₃; and
a crystalline phase of cerium oxide (CeO₂).

2. The oxide ion-conducting solid electrolyte according to claim 1, wherein the mayenite-type compound contains cerium (Ce).

3. The oxide ion-conducting solid electrolyte according to claim 1, comprising 2 mol% to 16 mol% of Ce in terms of CeO₂.

4. The oxide ion-conducting solid electrolyte according to claim 1 or 2, further comprising 0.1 mol% to 30 mol% of titanium (Ti) in terms of TiO₂.

5. The oxide ion-conducting solid electrolyte according to claim 4, wherein the Ti is disposed at sites of Al atoms in the mayenite-type compound.

6. An electrochemical device comprising the oxide ion-conducting solid electrolyte of claim 1 or 2.
